(19) Europäisches Patentamt
European Patent Office
Office européen des brevets

(11) **EP 4 388 285 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **22748370.8**

(22) Anmeldetag: **22.07.2022**

(51) Internationale Patentklassifikation (IPC):
*G01F 23/284* (2006.01)    *G01F 15/14* (2006.01)
*G01S 7/02* (2006.01)    *G01S 13/88* (2006.01)
*H01Q 1/22* (2006.01)    *G01D 11/24* (2006.01)
*G01D 21/00* (2006.01)

(52) Gemeinsame Patentklassifikation (CPC):
**G01F 23/284; G01D 11/24; G01D 21/00; G01F 15/14; G01S 7/027; G01S 13/88; H01Q 1/225**

(86) Internationale Anmeldenummer:
**PCT/EP2022/070616**

(87) Internationale Veröffentlichungsnummer:
**WO 2023/020780 (23.02.2023 Gazette 2023/08)**

(54) **MODULARES FELDGERÄT**

MODULAR FIELD DEVICE

DISPOSITIF DE TERRAIN MODULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2021 DE 102021121547**

(43) Veröffentlichungstag der Anmeldung:
**26.06.2024 Patentblatt 2024/26**

(73) Patentinhaber: **Endress+Hauser SE+Co. KG
79689 Maulburg (DE)**

(72) Erfinder:
• **OSSWALD, Dirk
79650 Schopfheim (DE)**
• **ARMBRUSTER, Ralf
79227 Schallstadt (DE)**

(74) Vertreter: **Endress + Hauser Group Services (Deutschland) AG+Co. KG
Colmarer Straße 6
79576 Weil am Rhein (DE)**

(56) Entgegenhaltungen:
DE-A1- 102017 119 358    DE-U1- 202006 001 904
US-A- 6 148 681    US-A1- 2010 188 296
US-A1- 2019 063 648    US-A1- 2020 286 306

**Beschreibung**

Die Erfindung betrifft ein modular auslegbares Feldgerät.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter etwa einen Füllstand, einen Durchfluss, einen Druck, eine Temperatur, einen pH-Wert, ein Redoxpotential oder eine Leitfähigkeit zu erfassen. Verschiedenste Feldgeräte-Typen werden von der Firmengruppe Endress + Hauser hergestellt und vertrieben.

Zur Füllstandsmessung von Füllgütern in Behältern haben sich berührungslose Messverfahren etabliert, da sie robust und wartungsarm sind. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz). Ein etabliertes Messverfahren bildet hierbei FMCW (*"Frequency Modulated Continuous Wave"*). Beschrieben wird das FMCW-basierte Füllstands-Messverfahren beispielsweise in der Offenlegungsschrift DE 10 2013 108 490 A1.

Prinzip-bedingt ist die Antenne von Radar-basierten Füllstandsmessgeräten mit direktem Kontakt zum Behälter-Inneren anzubringen, da zwischen der Antennen-Anordnung und dem Füllgut keine für Radar-Signale undurchlässige Barriere im Wege stehen darf. Vor allem zu Explosionsschutz-Zwecken wird jedoch oftmals eine räumliche Trennung zwischen den aktiven, also mit Strom versorgten Modulen und der passiven Sende-/Empfangs-Antenne gefordert. Hierzu umfasst das Füllstandsmessgerät einen Messgeräte-Hals, über den die Antenne mit demjenigen Gehäuseteil verbunden ist, in dem insbesondere temperaturempfindliche elektronische Module des Füllstandmessgerätes, wie Schnittstellen-Module zur Kommunikation nach außen untergebracht sind. Dabei ist in dem Messgeräte-Hals gen Antenne eine entsprechende Explosionsschutz-Barriere angeordnet. Zusätzlich oder alternativ zu Explosionsschutzanforderungen muss der Messgeräte-Hals gegebenenfalls weitere Schutzfunktionen erfüllen: Je nach Anwendung herrschen im Inneren des Behälters hohe Temperaturen, hoher Druck oder gefährliche Gase vor. Daher muss der Messgeräte-Hals je nach Anwendung als Druckdichtung, Temperaturbarriere und/oder als Medien-Abdichtung fungieren.

**Damit der** obere Gehäuseteil bzw. die im Innenraum befindlichen Schnittstellen-Module außer bei Füllstandsmessgeräten auch als Plattform für weitere Feldgeräte-Typen dienen können, und damit das Gerät insgesamt kompakter auslegbar ist, kann das für Radar-basierte Füllstandsmessgeräte spezifische Hochfrequenz-Modul in den Innenraum des Messgeräte-Halses ausgelagert werden. Vorteilhaft ist außerdem, wenn der vom Behälter abgewandte, obere Gehäuseteil mitsamt den innen befindlichen Modulen in Bezug zur Achse des Messgerätehals-Achse drehbar gegenüber dem Gerätehals angebracht ist. Hierdurch können etwaige Displays oder Kabelausgänge am oberen Gehäuseteil des Feldgerätes je nach seiner Einbausituation in der Prozessanlage flexibel ausgerichtet werden. Limitiert bzw. verhindert wird dies jedoch durch die erforderliche elektrische Verbindung zwischen dem im Messgerätehals angeordneten Hochfrequenz-Modul und dem im oberen Gehäuseteil angeordneten Elektronik-Modul.

In der Gebrauchsmusterschrift DE 202006001904 U1 und in den Veröffentlichungsschriften US 2019/063648 A1 und US 2020/286306 A1 sind jeweils ein Feldgerät mit einem zweiteiligen Gehäuse für entsprechende Elektronik-Module gezeigt, wobei sich die Gehäuseteile zumindest zu einem gewissen Grad gegeneinander verdrehen lassen.

Der Erfindung liegt die Aufgabe zugrunde, ein kompakt auslegbares und flexibel installierbares Füllstandsmessgerät auf modularer Basis bereitzustellen.

Die Erfindung löst diese Aufgabe durch ein Füllstandsmessgerät, das zumindest folgende Komponenten umfasst:

- Ein Gehäuse, mit

    ◦ einem ersten Gehäuseteil, welches einen ersten Innenraum ausbildet,
    ◦ einem zweiten Gehäuseteil, welches einen an den ersten Innenraum anschließenden, zweiten Innenraum ausbildet, und
    ◦ einem Verbindungsmittel wie beispielsweise einer Schraubverbindung, welches das erste Gehäuseteil mechanisch derart mit dem zweiten Gehäuseteil verbindet, so dass die Gehäuseteile in Bezug zu einer gemeinsamen Gehäuse- bzw. Schraub-Achse um zumindest 90° gegeneinander rotierbar sind,

- ein erstes Elektronik-Modul, welches starr im ersten Innenraum angeordnet ist, und
- ein zweites Elektronik-Modul, welches im zweiten Innenraum angeordnet ist,
- eine Sende-/Empfangs-Antenne zum Aussenden bzw. zum Empfang der Radar-Signale, und
- einen elektrischen Steckkontakt, welcher

    ◦ **in Richtung** der Gehäuse-Achse frei rotierbar zwischen dem zweiten Gehäuseteil und einer zum ersten Elektronik-Modul abgewandten Seite des zweiten Elektronik-Moduls angeordnet ist, und
    ◦ als Hochfrequenz-Verbindung zu der Sende-/Empfangs-Antenne dient.

Erfindungsgemäß zeichnet sich das Feldgerät dadurch aus, dass das zweite Elektronik-Modul in Bezug zur Gehäuse-Achse rotierbar und unverschiebbar im zweiten Innenraum angeordnet ist und zur Erzeugung des auszusenden Radar-Signals und/oder zur Bestimmung des Füllstandes anhand des empfangenen Radar-Signals dient. Dabei ist ein Übertragungsmittel vorgesehen, welches das zweite Elektronik-Modul mechanisch derart mit dem ersten-Elektronik-Modul und/oder dem ersten Gehäuseteil verbindet, so dass das Übertragungsmittel in Bezug zur Gehäuse-Achse eine Rotation des ersten Gehäuseteils gegenüber dem zweiten Gehäuseteil auf das zweite Elektronik-Modul überträgt. Hierdurch wird die Rotierbarkeit der Gehäuseteile gegeneinander nicht durch die elektrische Verbindung zwischen den Modulen eingeschränkt, so dass die Endmontage des modularen Feldgerätes und/oder die Ausrichtung des Feldgerätes in der Prozessanlage erleichtert wird.

Unter dem Begriff *"Moduf"* wird im Rahmen der Erfindung prinzipiell eine separate Anordnung bzw. Kapselung derjenigen elektronischen Schaltungen verstanden, die für einen konkreten Einsatzzweck, bspw. zur Hochfrequenz-Signalverarbeitung oder als Schnittstelle vorgesehen sind. Das entsprechende Modul kann also je nach Einsatzzweck entsprechende Analogschaltungen zur Erzeugung bzw. Verarbeitung entsprechender analoger Signale umfassen. Das Modul kann jedoch auch Digitalschaltungen, wie FPGA's, Microcontroller oder Speichermedien in Zusammenwirken mit entsprechenden Programmen umfassen. Dabei ist das Programm ausgelegt, die erforderlichen Verfahrensschritte durchzuführen bzw. die notwendigen Rechenoperationen anzuwenden. In diesem Kontext können verschiedene elektronische Schaltungen des Moduls im Sinne der Erfindung potenziell auch auf einen gemeinsamen physikalischen Speicher zurückgreifen bzw. mittels derselben physikalischen Digitalschaltung betrieben werden. Dabei ist es nicht relevant, ob verschiedene elektronische Schaltungen innerhalb des Moduls auf einer gemeinsamen Leiterkarte oder auf mehreren, verbundenen Leiterkarten angeordnet sind.

Bezüglich des Übertragungsmittels ist es besonders vorteilhaft, wenn es einen zwischen den Modulen angeordneten Separator umfasst, welcher aus einem elektrisch isolierenden Material gefertigt ist, um eine elektrische Schirmung bzw. Isolation der elektrischen Verbindung zum Gehäuse auszubilden.

Korrespondierend zum erfindungsgemäßen Feldgerät wird die Aufgabe, die der Erfindung zugrunde liegt, außerdem durch ein Verfahren zur Montage des Feldgerätes gelöst. Demnach umfasst das Verfahren folgende Verfahrensschritte:

- Einsetzen des ersten Elektronik-Moduls in den Innenraum des ersten Gehäuseteils,

- elektrische Kontaktierung des ersten Elektronik-Moduls mit dem zweiten Elektronik-Modul über eine entsprechende elektrische Verbindung,
- Einsetzen des zweiten Elektronik-Moduls in den Innenraum des zweiten Gehäuseteils bevor oder nachdem das zweiten Elektronik-Modul elektrisch mit dem ersten Elektronik-Modul kontaktiert wird, und
- Befestigen des ersten Gehäuseteils am zweiten Gehäuseteil über das rotierbare Verbindungsmittel, so dass das Übertragungsmittel in Bezug zur Gehäuse-Achse eine Rotation des ersten Gehäuseteils gegenüber dem zweiten Gehäuseteil auf das zweite Elektronik-Modul überträgt.

Anhand der nachfolgenden Figuren wird die Erfindung näher erläutert. Es zeigt:

Fig. 1: Ein Radar-basiertes Füllstandsmessgerät an einem Behälter,
Fig. 2: eine Querschnittsansicht des erfindungsgemäßen Füllstandsmessgerätes,
Fig. 3 und Fig. 4: Detail-Ansichten des Füllstandsmessgerätes im Bereich des Übertragungsmittels.

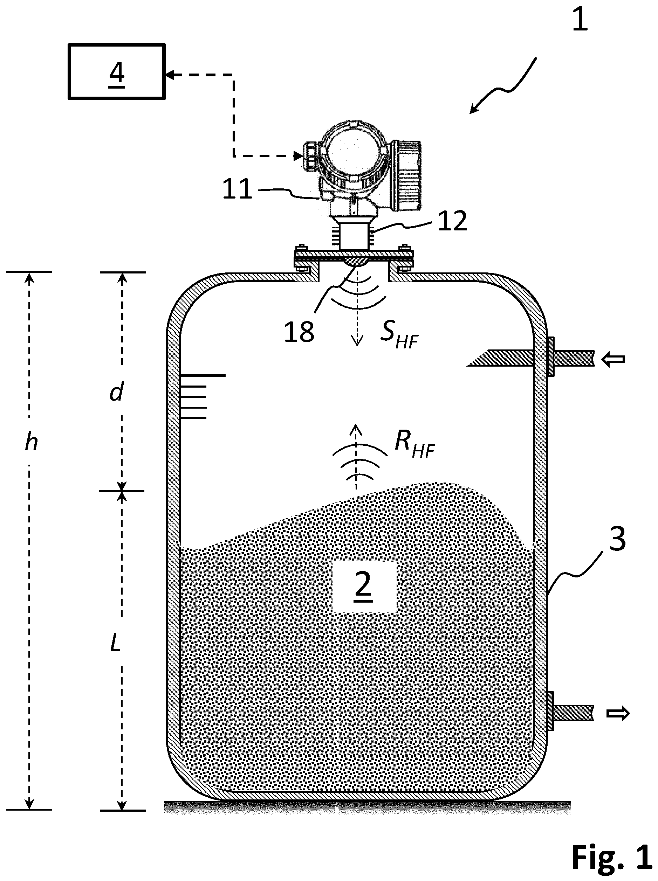

Zum prinzipiellen Verständnis wird die Erfindung in den nachfolgenden Figuren anhand eines Radar-basierten Füllstandsmessgerätes 1 verdeutlicht: Dementsprechend ist in Fig. 1 ein Behälter 3 mit einem Füllgut 2 gezeigt, dessen Füllstand L zu bestimmen ist. Dabei kann der Behälter 3 je nach Art des Füllgutes 2 und je nach Einsatzgebiet bis zu mehr als 100 m hoch sein. Von der Art des Füllgutes 2 und dem Einsatzgebiet hängen auch die Bedingungen im Behälter 3 ab. So kann es im Falle von exothermen Reaktionen beispielsweise zu hoher Temperatur- und Druckbelastung kommen. Bei staubhaltigen oder entzündlichen Stoffen sind im Behälter-Inneren entsprechende Explosionsschutzbedingungen einzuhalten.

Um den Füllstand L unabhängig von den vorherrschenden Bedingungen ermitteln zu können, ist das Füllstandsmessgerät 1 in einer bekannten Einbauhöhe h oberhalb des Füllgutes 2 am Behälter 3 angebracht. Dabei ist das Füllstandsmessgerät 1 derart an einer entsprechenden Öffnung des Behälters 3 befestigt bzw. ausgerichtet, dass in den Behälter 3 hinein eine Antenne 18 des Füllstandsmessgerätes 1 vertikal nach unten gen Füllgut 2 gerichtet ist.

Über die Antenne 18 werden Radar-Signale $S_{HF}$ vertikal nach unten in Richtung der Oberfläche des Füllgutes 2 ausgesendet. Nach Reflektion an der Füllgut-Oberfläche empfängt das Füllstandsmessgerät 1 die reflektierten Radar-Signale $R_{HF}$ wiederum über die Antenne 18. Dabei ist die Signallaufzeit t zwischen Aussenden und Empfang des jeweiligen Radar-Signals $S_{HF}$, $R_{HF}$ gemäß

$$t = \frac{2 * d}{c}$$

proportional zum Abstand d zwischen dem Füllstandsmessgerät 1 und dem Füllgut 2, wobei c die Radar-Ausbreitungsgeschwindigkeit entsprechend Lichtgeschwindigkeit ist. Die Signallaufzeit t kann vom Füllstandsmessgerät 1 beispielsweise mittels des FMCW- oder mittels des Pulslaufzeit-Verfahrens bestimmt werden. Hierdurch kann das Füllstandsmessgerät 1 beispielsweise auf Basis einer entsprechenden Kalibration die gemessene Laufzeit t dem jeweiligen Abstand d zuordnen. Hierüber kann das Füllstandsmessgerät 1 gemäß

$$d = h - L$$

wiederum den Füllstand L bestimmen, sofern die Einbauhöhe h im Füllstandsmessgerät 1 hinterlegt wird. Die Antenne 18 wird innerhalb des Füllstandsmessgerätes 1 signaltechnisch von einem Hochfrequenz-Modul 15 angesteuert. Dabei ist als Messprinzip zur Erzeugung des auszusendenden Radar-Signals $S_{HF}$ und zur Bestimmung der Signallaufzeit t anhand des eingehenden Empfangs-Signals $R_{HF}$ im Hochfrequenz-Modul 15 beispielsweise das FMCW- oder Pulslaufzeit-Messprinzip implementiert.

In der Regel ist das Füllstandsmessgerät 1 über ein separates Schnittstellen-Modul 14, wie etwa "4-20 mA", "PROFIBUS", "HART", oder "Ethernet" mit einer übergeordneten Einheit 4, wie z. B. einem lokalen Prozessleitsystem oder einem dezentralen Server-System verbunden. Hierüber kann der gemessene Füllstandswert L übermittelt werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden. Die separate Unterbringung der Schnittstellen in einem eigenen Modul 14 besitzt den Vorteil, dass es neben Füllstandsmessgeräten auch in weiteren, modular aufgebauten Feldgeräten eingesetzt werden kann.

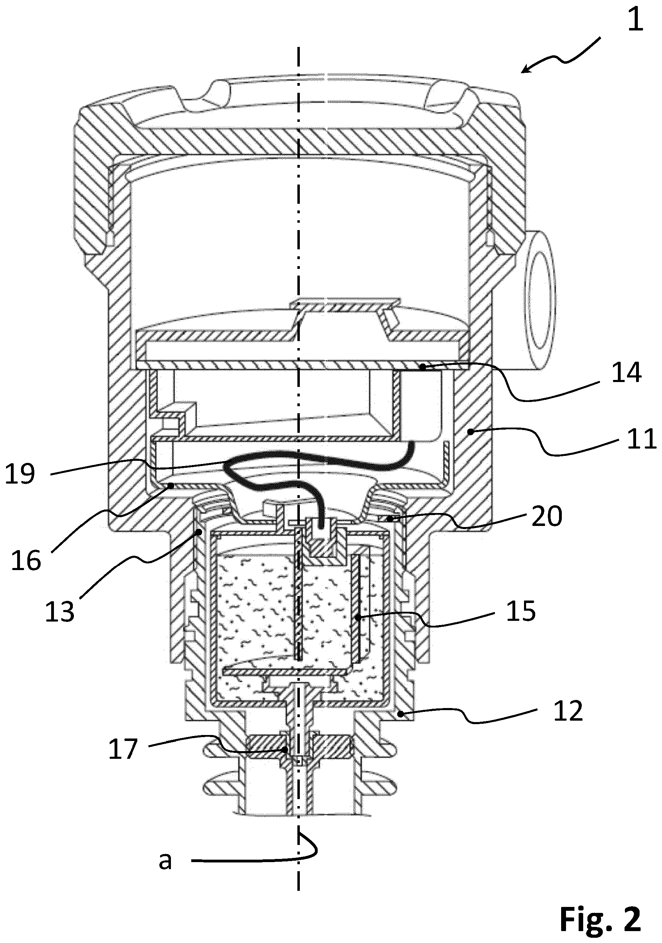

Abgesehen von der Antenne 18 sind alle weiteren Komponenten 11, 12 bzw. Module 14, 15 des Füllstandsmessgerätes 1 außerhalb des Behälters 3 angeordnet, um einerseits Explosions-Schutz innerhalb des Behälters 3 vor den elektrischen Modulen 14, 15 des Füllstandsmessgerätes 1 zu gewährleisten. Andererseits werden hierdurch die elektronischen Module 14, 15 vor Temperatur- und Druck-Belastung aus dem Behälter-Inneren geschützt. Dementsprechend ist das Schnittstellen-Modul 14, wie in Fig. 2 näher dargestellt ist, in einem Innenraum eines ersten Gehäuseteils 11 angeordnet, welcher durch einen zweiten Gehäuseteil in Form eines Messgeräte-Halses 12 von der Antenne 18 beabstandet ist. Wie in Fig. 1 und Fig. 2 angedeutet ist, kann der Messgeräte-Hals 12 zur thermischen Entkopplung zusätzlich entsprechende Kühlrippen aufweisen.

Wie bei der in Fig. 1 gezeigten Ausführungsvariante dargestellt ist, kann der erste Gehäuseteil 11 beispielsweise über eine Schraubverbindung 13 mit dem Messgeräte- Hals 12 verbunden sein, wobei die Schraubverbindung 13 eine gemeinsame Gehäuse-Achse a definiert. Im gezeigten Ausführungsbeispiel umfasst der erste Gehäuseteil 11 hierzu in dessen ersten Innenraum ein entsprechendes Innengewinde. Am Messgeräte- Hals 12 ist ein korrespondierendes Außengewinde angeordnet, so dass der Innenraum des Messgeräte-Halses 12 mit dem Innenraum des ersten Gehäuseteils 11 verbunden ist. Vorteilhaft an einem solchen Verbindungsmittel 13, mittels welchem der erste Gehäuseteil 11 in Bezug zur Gehäuse-Achse a gegen den Gehäuse-Hals 12 rotiert werden kann, ist, dass etwaige Displays oder Kabeldurchführungen am oberen, ersten Gehäuseteil 11 in der Prozessanlage flexibel ausgerichtet werden können, auch wenn der Messgeräte-Hals 12 starr mit dem Behälter 3 verbunden ist.

Da das Hochfrequenz-Modul 15 zu einer verlust- und störungsarmen Übertragung möglichst nah an der Antenne 18 angeordnet sein muss, ist das Hochfrequenz-Modul 15 unterhalb des ersten Gehäuseteils 11 im Messgeräte-Hals 12 angeordnet und über einen elektrischen HF-Steckkontakt 17 auf einer zum ersten Elektronik-Modul 14 abgewandten Seite des zweiten Elektronik-Moduls 15 mit der Antenne 18 verbunden. Das Hochfrequenz-Modul 15 ist zudem durch eine Kapselung umschlossen, die aus einem Kunststoff, wie PC, PE, PP oder PA gefertigt sein kann. Dies ermöglicht es, das Innere des Hochfrequenz-Moduls 15 zu Explosionsschutzzwecken zusätzlich mittels einer Vergussmasse zu kapseln.

Zumindest, um den Füllstandswert L an das Schnittstellen-Modul 14 zu übertragen, oder um Kalibrier- bzw. Parametrier-Daten an das Hochfrequenz-Modul 15 zu übertragen, ist eine entsprechende elektrische Verbindung 19 zwischen den beiden Modulen 14, 15 erforderlich. Beim Anbringen des ersten Gehäuseteils 11 an den Messgeräte-Hals 12 während der Endmontage des Füllstandsmessgerätes 1, oder beim Ausrichten des ersten Gehäuseteils 11 während der Installation des Füllstandsmessgerätes 1 am Behälter 3 wirkt sich eine solche elektrische Verbindung 19 je nach Auslegung jedoch stark limitierend aus, da sie in Bezug zur gemeinsamen Gehäuse-Achse a, lediglich eine eingeschränkte Rotation des ersten Gehäuseteils 11 gegenüber dem Messgeräte-Hals 12 erlaubt.

Erfindungsgemäß ist daher das Hochfrequenz-Modul 15 in Bezug zur Gehäuse-Achse a frei rotierbar im Innenraum des Messgeräte-Halses 12 angeordnet. Hierzu ist der Hochfrequenz-Steckkontakt 17 entlang der Achse a ausgerichtet und frei rotierbar. Dabei kann der Hochfrequenz-Steckkontakt 17 beispielsweise als Hohlleiter-Steckkontakt oder als Steckkontakt für einen dielektrischen Wellenleiter ausgelegt sein. Des Weiteren drückt eine nicht explizit dargestellte Wellenfeder das Hochfrequenz-Modul 15 unter Führung entsprechender Führungselemente vom Inneren des Messgeräte-Halses 12 ausgehend mit einer definierten Kraft gen Antenne 18.

Dabei ist die Wellenfeder im Inneren des Messgeräte-Halses 12 zwischen einer Nut bzw. einem korrespondierenden Sicherungsring 20 und derjenigen Außenseite der des Hochfrequenz-Moduls 15 eingespannt, die dem Hochfrequenz-Steckkontakt 17 abgewandt ist. Hierdurch ist das zweite Hochfrequenz-Modul 15 in Bezug zur Gehäuse-Achse a frei rotierbar und gleichzeitig unverschiebbar im Innenraum des Messgeräte-Halses 12 angeordnet.

Außerdem ist zwischen dem ersten Gehäuseteil 11 und dem Messgeräte-Hals 12 erfindungsgemäß ein Übertragungsmittel 16 angeordnet, welches das Hochfrequenz-Modul 15 mechanisch insofern an den ersten Gehäuseteil 11 koppelt, als dass jegliche Rotation des ersten Gehäuseteils 11 in Bezug zur Gehäuse-Achse a gegenüber dem zweiten Gehäuseteil 12 auf das zweite Elektronik-Modul 15 übertragen wird. Vorteilhaft hieran ist, dass die elektrische Verbindung 19 durch die Übertragung der Rotation 19 etwaiges Verdrehen des ersten Gehäuseteils 11 gegenüber dem Messgeräte-Hals 12, wie beispielsweise beim Anschrauben des ersten Gehäuseteils 11 an den Messgeräte-Hals 12 oder beim Ausrichten des ersten Gehäuseteils 11 in der Prozessanlage, nicht behindert. Hierdurch wird die Fehleranfälligkeit bei der Endmontage des Füllstandsmessgerätes 1 verringert, wobei die Endmontage auf Basis folgender Verfahrensschritte durchgeführt werden kann:

- Einsetzen des ersten Schnittstellen-Moduls 14 in den Innenraum des ersten Gehäuseteils 11,
- elektrische Kontaktierung des Schnittstellen-Moduls 14 mit dem Hochfrequenz-Modul 15 über die elektrische Verbindung 19,
- Einsetzen des Hochfrequenz-Moduls 15 in den Innenraum des Messgeräte-Halses bzw. des zweiten Gehäuseteils 12 bevor oder nachdem das Hochfrequenz-Modul 15 elektrisch mit dem Schnittstellen-Modul 14 kontaktiert wird, und
- Befestigen des ersten Gehäuseteils 11 am Messgeräte-Hals 12 über die Schraubverbindung bzw. das rotierbare Verbindungsmittel 13, so dass das Übertragungsmittel 16 in Bezug zur Gehäuse-Achse a etwaige Rotationen des ersten Gehäuseteils 11 gegenüber dem zweiten Gehäuseteil 12 auf das Hochfrequenz-Modul 15 überträgt.

Dabei ist es denkbar, dass der erste Gehäuseteil 11 am Messgeräte-Hals 12 befestigt wird, bevor oder nachdem der Messgeräte-Hals 12 am Behälter 3 fixiert wird.

Alternativ zu der gezeigten Ausführungsvariante ist es gemäß der erfindungsgemäßen Idee auch möglich, das Hochfrequenz-Modul 15 mechanisch nicht direkt an das erste Gehäuseteil 11 zu koppeln, sondern an das erste Elektronik-Modul 14, da dieses starr mit dem ersten Gehäuseteil 11 verbunden ist. Auch in diesem Fall wird eine Rotation des ersten Gehäuseteils 11 auf das Hochfrequenz-Modul 15 übertragen.

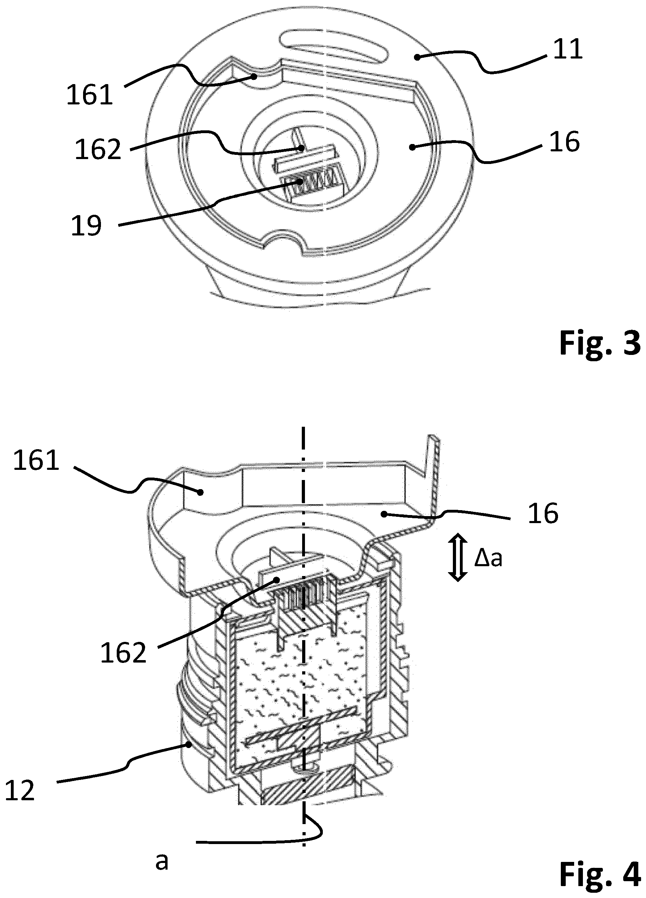

Anhand von Fig. 3 und Fig. 4 wird die in Fig 2 gezeigte Ausführungsform des erfindungsgemäßen Übertragungsmittels 16 näher erläutert: Demnach umfasst das Übertragungsmittel 16 einen in etwa orthogonal zur Achse a ausgebildeten Separator, welcher zwischen dem Schnittstellen-Modul 14 und dem Hochfrequenz-Modul 15 angeordnet ist. Dabei ist der Separator gen Hochfrequenz-Modul 15 ausgewölbt und vorzugsweise aus einem elektrisch isolierenden Material gefertigt, um das elektrische Verbindungskabel 19 elektrisch vom ersten Gehäuseteil 11 und/oder vom zweiten Gehäuseteil 12 zu schirmen.

In Bezug zur Achse a umfasst ein Randbereich des Separators zwei in etwa gegenüberliegende und axial ausgerichtete Nuten 161. Nach Einsetzen des Separators in den ersten Innenraum des ersten Gehäuseteils 11 greifen zwei korrespondierende Eingriffe des ersten Gehäuseteils 11 in die Nuten 161 ein, wie aus Fig. 3 hervorgeht. Hierdurch werden axiale Rotationen des ersten Gehäuseteils 11 in Bezug zum Messgeräte-Hals 12 auf den Separator übertragen. Zur weiteren Übertragung der Rotation vom Separator auf das Hochfrequenz-Modul 15 ist im Separator nahe bzw. orthogonal zur gemeinsamen Gehäuse-Achse a eine T-förmige Durchführung 162 eingelassen. Die Durchführung 162 führt ein T-förmiges Profil, welches ausgehend von der Kapselung des Hochfrequenz-Moduls 15 entlang der Achse a entsprechend T-förmig extrudiert ist. Durch die T-Form des Profils bzw. der Durchführung 162 werden axiale Rotationen des ersten Gehäuseteils 11 über den Separator des Übertragungsmittels 16 weiter auf das Hochfrequenz-Modul 15 übertragen. Es versteht sich von selbst, dass im Sinne der Erfindung anstelle der T-Form auch jegliche andere Form, mittels welcher eine Rotation übertragbar ist, implementiert werden kann.

Wie aus Fig. 4 hervorgeht, ist das T-förmige Profil 162 am Hochfrequenz-Modul 15 konstruktiv länger als eine definierte Mindest-Länge $\Delta a$ extrudiert, wobei die Mindest-Länge jener axialen Abstandsänderung $\Delta a$ zwischen dem Hochfrequenz-Modul 15 und dem ersten Gehäuseteil 11 entspricht, die durch das Verschrauben der Schraubverbindung 13 über die gesamte Gewinde-Länge resultiert. Hierdurch nimmt die gezeigte Ausführungsvariante des Übertragungsmittels 16 die resultierende Abstandsänderung $\Delta a$ zwischen dem zweiten Elektronik-Modul 15 und dem ersten Elektronik-Modul 14 bzw. dem ersten Gehäuseteil 11 auf. Somit wirkt es sich auf das Übertragungsmittel 16 nicht einschränkend aus, dass das Hochfrequenz-Modul 15 in Bezug zur Gehäuse-Achse a gegebenenfalls nicht-verschiebbar im Innenraum des Messgeräte-Halses 12 angeordnet ist.

Im Gegensatz zu der gezeigten Ausführungsvariante des Übertragungsmittels 16 auf Basis des Separators ist es im Rahmen der Erfindung auch denkbar, das Übertragungsmittel 16 ausschließlich als integrale Bestandteile der Module 14, 15 bzw. des ersten Gehäuseteils 11 auszulegen. Hierzu kann die Durchführung 162 beispielsweise als integraler Bestandteil des ersten Gehäuses 11 konzipiert werden.

Obwohl die erfindungsgemäße Idee in Fig. 1 bis Fig. 4 anhand eines radar-basierten Füllstandsmessgerätes 1 verdeutlicht ist, kann dies auch auf Feldgeräte allgemein übertragen werden, sofern das Feldgerät anstelle des Hochfrequenz-Moduls allgemein ein zweites Elektronik-Modul 15 aufweist, bzw. sofern es allgemein einen zweiten Gehäuseteil 12 anstelle des Messgeräte-Halses umfasst. Auch das Verbindungsmittel 13 muss nicht zwingend als Schraubverbindung ausgelegt sein, sofern es, wie beispielsweise im Falle des Bajonett-Verschlusses, um mindestens 90° rotierbar ist und die Gehäuseteile 11, 12 des Feldgeräte-Gehäuses bzw. deren Innenräume entlang der gemeinsamen Gehäuse-Achse a entsprechend verbindet.

**Bezugszeichenliste**

| 1 | Füllstandsmessgerät |
| 2 | Füllgut |
| 3 | Behälter |
| 4 | Übergeordnete Einheit |
| 11 | Erstes Gehäuseteil |
| 12 | Zweites Gehäuseteil/Geräte-Hals |
| 13 | Verbindungsmittel |
| 14 | Erstes Elektronik-Modul |
| 15 | Zweites Elektronik-Modul |
| 16 | Übertragungsmittel |
| 17 | Elektrischer Steckkontakt |
| 18 | Sende-/Empfangs-Antenne |
| 19 | Elektrische Verbindung |
| 20 | Sicherungsring |
| 161 | Nut |
| 162 | Durchführung/Profil |
| a | Gehäuse-Achse |
| d | Entfernung |
| h | Einbauhöhe |
| L | Füllstand |
| $R_{HF}$ | Reflektiertes Radar-Signal |
| $S_{HF}$ | Radar-Signal |
| $\Delta a$ | Axiale Abstandsänderung |

**Patentansprüche**

1. **Radar-basiertes** Füllstandsmessgerät, folgende Komponenten umfassend:

   - Ein Gehäuse, mit

     ◦ einem ersten Gehäuseteil (11), welches einen ersten Innenraum ausbildet,
     ◦ einem zweiten Gehäuseteil (12), welches einen an den ersten Innenraum anschließenden, zweiten Innenraum ausbildet, und

     ◦ einem Verbindungsmittel (13), welches das erste Gehäuseteil (11) mechanisch derart mit dem zweiten Gehäuseteil (12) verbindet, so dass die Gehäuseteile (11, 12) in Bezug zu einer gemeinsamen Gehäuse-Achse (a) um zumindest 90° gegeneinander rotierbar sind,

   - ein erstes Elektronik-Modul (14), welches starr im ersten Innenraum angeordnet ist,
   - ein zweites Elektronik-Modul (15), welches

     ◦ in Bezug zur Gehäuse-Achse (a) rotierbar und unverschiebbar im zweiten Innenraum angeordnet ist und
     ◦ zur Erzeugung eines auszusenden Radar-Signals ($S_{HF}$) und/oder zur Bestimmung des Füllstandes (L) anhand eines empfangenen Radar-Signals ($R_{HF}$) dient,

   - ein Übertragungsmittel (16), welches das zweite Elektronik-Modul (15) mechanisch derart mit dem ersten-Elektronik-Modul (14) und/oder dem ersten Gehäuseteil (11) verbindet, so dass das Übertragungsmittel (16) in Bezug zur Gehäuse-Achse (a) eine Rotation des ersten Gehäuseteils (11) gegenüber dem zweiten Gehäuseteil (12) auf das zweite Elektronik-Modul (15) überträgt,
   - eine Sende-/Empfangs-Antenne (18) zum Aussenden bzw. zum Empfang der Radar-Signale ($S_{HF}$, $R_{HF}$), und
   - einen elektrischen Steckkontakt (17), welcher

     ◦ in Richtung der Gehäuse-Achse (a) frei rotierbar zwischen dem zweiten Gehäuseteil (12) und einer zum ersten Elektronik-Modul (14) abgewandten Seite des zweiten Elektronik-Moduls (15) angeordnet ist, und
     ◦ als Hochfrequenz-Verbindung zu der Sende-/Empfangs-Antenne (18) dient.

2. Füllstandsmessgerät nach einem der vorhergehenden Ansprüche, wobei das Verbindungsmittel (13) derart als Schraubverbindung konzipiert ist, so dass eine Schraub-Achse deckungsgleich mit der Gehäuse-Achse (a) verläuft.

3. **Füllstandsmessgerät** nach Anspruch 2, wobei das Übertragungsmittel (16) mechanisch derart flexibel ausgelegt ist, um in Bezug zur Gehäuse-Achse (a) eine durch Rotation an der Schraubverbindung (13) bedingte, definierte Abstandsänderung ($\Delta a$) des zweiten Elektronik-Moduls (15) zum ersten Elektronik-Modul (14) hin bzw. zum ersten Gehäuseteil (11) hin auszugleichen.

4. Füllstandsmessgerät nach einem der vorhergehenden Ansprüche, wobei das Übertragungsmittel (16) einen zwischen den Modulen (14, 15) angeordneten Separator umfasst, welcher einem elektrisch isolierenden Material gefertigt ist.

5. Verfahren zur Montage des Füllstandsmessgerätes (1) nach einem der vorhergehenden Ansprüche, folgende Verfahrensschritte umfassend:

- Einsetzen des ersten Elektronik-Moduls (14) in den Innenraum des ersten Gehäuseteils (11),
- Einsetzen des zweiten Elektronik-Moduls (15) in den Innenraum des zweiten Gehäuseteils (12),
- elektrische Kontaktierung des ersten Elektronik-Moduls (14) mit dem zweiten Elektronik-Modul (15) über eine elektrische Verbindung (19), und
- Befestigen des ersten Gehäuseteils (11) am zweiten Gehäuseteil (12) mittels des rotierbaren Verbindungsmittels (13), so dass das Übertragungsmittel (16) in Bezug zur Gehäuse-Achse (a) eine Rotation des ersten Gehäuseteils (11) gegenüber dem zweiten Gehäuseteil (12) auf das zweite Elektronik-Modul (15) überträgt.

**Claims**

1. Radar-based level measuring device, comprising the following components:

- A housing, with

  ○ a first housing part (11) which forms a first interior space,
  ○ a second housing part (12) which forms a second interior space adjoining the first interior space, and
  ○ a connecting means (13) connecting the first housing part (11) mechanically to the second housing part (12) in such a way that the housing parts (11, 12) can be rotated relative to each other by at least 90° with respect to a common housing axis (a),

- a first electronic module (14) which is rigidly arranged in the first interior space,
- a second electronic module (15), which

  ○ is arranged in the second interior space so that it can rotate relative to the housing axis (a) but cannot be displaced, and
  ○ for generating a radar signal ($S_{HF}$) to be transmitted and/or for determining the fill level (L) on the basis of a received radar signal signal ($R_{HF}$),

- a transmission means (16) which mechanically connects the second electronic module (15) to the first electronic module (14) and/or the first housing part (11) in such a way that the transmission means (16) allows the first housing part (11) to rotate relative to the housing axis (a) with respect to the second housing part (12) is transmitted to the second electronic module (15),
- a transmitting/receiving antenna (18) for transmitting and receiving the radar signals ($S_{HF}$, $R_{HF}$), and
- an electrical plug contact (17), which

  ○ freely rotatable in the direction of the housing axis (a) between the second housing part (12) and a side of the second electronic module (15) facing away from the first electronic module (14), and
  ○ serves as a high-frequency connection to the transmitting/receiving antenna (18).

2. Level measuring device according to one of the preceding claims, wherein the connecting means (13) is designed as a screw connection such that a screw axis runs congruently with the housing axis (a).

3. Level measuring device according to claim 2, wherein the transmission means (16) is mechanically designed to be flexible in such a way that, in relation to the housing axis (a), it allows a defined change in distance ($\Delta a$) of the second electronic module (15) relative to the first electronic module (14) or to the first housing part (11).

4. Level measuring device according to one of the preceding claims, wherein the transmission means (16) comprises a separator arranged between the modules (14, 15), which is made of an electrically insulating material.

5. Method for assembling the level measuring device (1) according to one of the preceding claims, comprising the following method steps:

- Inserting the first electronic module (14) into the interior of the first housing part (11),
- inserting the second electronic module (15) into the interior of the second housing part (12),
- establishing electrical contact between the first electronic module (14) and the second electronic module (15) via an electrical connection (19), and
- fastening the first housing part (11) to the second housing part (12) by means of the rotatable connecting means (13) so that the transmission means (16) transmits a rotation of the first housing part (11) relative to the second housing part (12) to the second electronic module (15) in relation to the housing axis (a).

## Revendications

1. Appareil de mesure de niveau basé sur un radar, comprenant les composants suivants :

    - un boîtier, avec

        ○ une première partie de boîtier (11) qui forme un premier espace intérieur,
        ○ une deuxième partie de boîtier (12) qui forme un deuxième espace intérieur raccordé au premier espace intérieur, et
        ○ un moyen de liaison (13) qui relie la première partie de boîtier (11) mécaniquement à la deuxième partie de boîtier (12) de telle sorte que les parties de boîtier (11, 12) puissent pivoter l'une par rapport à l'autre d'au moins 90° par rapport à un axe de boîtier commun (a),

    - un premier module électronique (14) qui est disposé de manière rigide dans le premier espace intérieur,
    - un deuxième module électronique (15) qui

        ○ est disposé de manière rotative et immobile dans le deuxième espace intérieur par rapport à l'axe (a) du boîtier et
        ○ pour générer un signal radar ($S_{HF}$) à émettre et/ou pour déterminer le niveau de remplissage (L) à l'aide d'un signal radar reçu ($_{RHF}$) à émettre,

    - un moyen de transmission (16) qui relie mécaniquement le deuxième module électronique (15) au premier module électronique (14) et/ou à la première partie du boîtier (11) de telle sorte que le moyen de transmission (16) permet une rotation de la première partie du boîtier (11) par rapport à l'axe du boîtier (a) deuxième partie de boîtier (12) par rapport au deuxième module électronique (15),
    - une antenne d'émission/réception (18) pour émettre ou recevoir les signaux radar ($S_{HF}$, $R_{HF}$), et
    - un contact électrique enfichable (17) qui

        ○ librement rotatif dans la direction de l'axe du boîtier (a) entre le deuxième partie de boîtier (12) et un côté du deuxième module électronique (15) opposé au premier module électronique (14), et
        ○ sert de connexion haute fréquence à l'antenne d'émission/réception (18).

2. Appareil de mesure de niveau selon l'une des revendications précédentes, le moyen de connexion (13) étant conçu comme une connexion vissée de telle sorte qu'un axe de vissage s'étende de manière congruente avec l'axe du boîtier (a).

3. Appareil de mesure de niveau selon la revendication 2, dans lequel le moyen de transmission (16) est conçu de manière mécanique de manière flexible afin de permettre, par rapport à l'axe du boîtier (a), une modification définie de la distance (Δa) du deuxième module électronique (15) par rapport au premier module électronique (14) ou à la première partie du boîtier (11).

4. Appareil de mesure de niveau selon l'une des revendications précédentes, le moyen de transmission (16) comprenant un séparateur disposé entre les modules (14, 15), lequel est fabriqué dans un matériau électriquement isolant.

5. Procédé de montage du dispositif de mesure de niveau (1) selon l'une des revendications précédentes, comprenant les étapes suivantes :

    - insertion du premier module électronique (14) à l'intérieur de la première partie du boîtier (11),
    - Insertion du deuxième module électronique (15) dans l'espace intérieur de la deuxième partie de boîtier (12),
    - établissement d'un contact électrique entre le premier module électronique (14) et le deuxième module électronique (15) via une connexion électrique (19), et
    - fixation de la première partie de boîtier (11) à la deuxième partie de boîtier (12) au moyen du moyen de liaison rotatif (13), de sorte que le moyen de transmission (16) transmet au deuxième module électronique (15) une rotation de la première partie de boîtier (11) par rapport à la deuxième partie de boîtier (12) par rapport à l'axe (a) du boîtier.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013108490 A1
- DE 202006001904 U1
- US 2019063648 A1
- US 2020286306 A1